# EUROPEAN PATENT APPLICATION

(11) **EP 2 478 755 A1**
(43) Date of publication of application: **25.07.2012**
(21) Application number: 11000533.7
(22) Date of filing: 24.01.2011
(51) Int. Cl.: A01C 1/04, A01G 1/00

(54) **Dry organic additivated clod and process for its preparation**

(71) Applicant: Biocart S.r.l., 85050 Tito Scalo (PZ) (IT)
(72) Inventor: Colangelo, Antonio, 85050 Tito Scalo (PZ) (IT)
(74) Representative: Trupiano, Federica

(57) **Abstract**

The present invention relates to a completely additivated clod of dry organic material and ready to be laid on suitable ground and subsequent creation of natural lawns, flower beds or flowered areas, areas with fruit and vegetable products and to a process for the production thereof.

## Description

The present invention relates to a completely additivated clod of dry organic material and ready to be laid on suitable ground and subsequent creation of natural lawns, flower beds or flowered areas, areas with fruit and vegetable products and to a process for the production thereof.

Substantially, two methods are known for creating lawns: the sowing of seed and the laying of ready-prepared turf, which can be purchased, for example, in specialized nurseries. This latter system is widely used today both to create ornamental lawns and to create sports fields. This phenomenon has become popular due to the fact that turf is very easy to plant and has the advantage of offering immediate cover, unlike the case of a conventional lawn created by sowing seed. In fact, in the case of turf the lawn only takes a few weeks to stabilize.

However, after being purchased the turf must be laid in the shortest possible time (within a maximum of 36 hours). Therefore, at the time of purchase the ground must have already been prepared, with a mixture of soil and sand, damp and rich in organic matter. During laying, each piece of turf must be stabilized, for example applying light pressure to promote adhesion of the roots to the ground. After laying has been completed, light rolling must be carried out and only subsequently can the gap between one piece of turf and the next be filled, for example with a mixture of sand and peat. It is then necessary to water the grass thus laid regularly for the next ten to fifteen days.

Unlike a lawn created by sowing seed, a lawn created with turf has the advantage that it can be laid at any time of year and limits the spread of weeds.

Notwithstanding the numerous advantages of a lawn created with turf over a conventional lawn obtained by sowing seed, this system has some drawbacks, for example regarding the fact that the range of choice of grass varieties is limited and the initial costs are higher.

To attempt to overcome these drawbacks, above all that of having to lay the turf within a maximum of 36 hours from purchase, "dry" modular clods are known, which already comprise all those components required for growth of the grass but which can be "stored" for long time, without being subject to any damage and which, once laid and by means of simple irrigation can lead to the growth of a lawn in the same manner as a lawn obtained by sowing seed.

For example, the Italian Patent IT 1309439 relates to a process for the production of a modular clod of growing soil comprising all the components and ingredients required for conservation, subsequent laying, germination and growth of grass species, such as gramineous plants, to form grass and lawns or for the growth of other plants, useful in particular both in professional and amateur gardening.

The process described comprises, schematically and in order, the following steps:
1. Preparating a substrate based on inert siliceous sand (80-90%) and peat (10-20%) with natural starch that acts as adhesive.
**2. Sowing the substrate.**
3. Additioning the fertilizer and weed killer, if required.
4. Cutting by pressing or extrusion with formation of briquettes having a thickness between 1.5 and 8 cm.
5. Cohesioning the single briquettes obtained to maintain the geometrical shape of the clod, promote ease of handling and limit friability, and to fix the seeds deposited and prevent their dispersion.
6. Drying the clod for its future conservation and storage.
7. Subsequent laying the clod, wetting and regular watering thereof until growth of the lawn.

The cohesioning step (5) can also be implemented by immersing the single clods in a bath of natural adhesive.

The process described can be used not only to create grass or lawns but also to obtain flower borders, cushions of flowers, flower clumps and hanging flower cascades for beds. The process can also be applied for the growth of vegetables and the cultivation of mushrooms.

However, the process forming the object of IT 1309439 has a series of disadvantages and drawbacks, which can be highlighted schematically as follows.

According to the method described in the aforesaid prior art document, laying of the seed takes place in an initial step and it is therefore probable that these are positioned at a depth, with respect to the final depth of the clod, that makes their subsequent germination difficult. In this case, the final result in the growth of the plant (grass, vegetable or flower) will be unsatisfactory, for example with regard to the homogeneity of the resulting lawn or cushion of grass or flowers.

The obtained clod with the process according to prior art can be produced in thicknesses variable from 1.5 to 8 cm, which are relatively high for the intended use of the clods. As, according to the process described in IT 1309439, the seeds are deposited in the initial step (step 2, as indicated above), it is not in fact possible to subject the clod to a pressure (step 4) that is too high and such as to significantly reduce the final thickness of the clod, as in this case the seeds would be "imprisoned" in the clod without the correct aeration and the correct structure and porosity of the substrate, thereby preventing germination, making irrigation difficult and corresponding growth somewhat ineffective. This aspect, i.e. the need to produce clods of considerable thickness and consequent impossibility of obtaining clods of reduced thickness, represents a significant disadvantage of the prior art process.

To obtain a clod that is homogeneous, non-friable and therefore easy to handle and to store, it is necessary to use a large quantity of adhesive, albeit of natural origin, to hold together all the components of the clod.

Moreover, another disadvantage deriving from the process described according to prior art is represented by the fact that one of the base components of the substrate is constituted by peat, which is a natural compost classified as non-renewable natural element. Therefore, its prolonged use in significant quantities implies the risk of depletion.

As discussed above, the process described in IT 1309439 makes it possible to obtain modular clods already containing all the components and ingredients required for the conservation, subsequent laying, germination and growth of grass species or for the growth of other plants, which necessarily have a very high thickness, a significant quantity of adhesive agents and a relatively high quantity of peat, all negative aspects that imply potential problems in the use of the product.

The object of the present invention is to provide a process for the production of dry organic additivated clods ready to be laid on suitable ground, which allow the creation of natural lawns, flower beds or flowered areas, areas with fruit and vegetable products, which have a limited thickness but at the same time allow homogeneous and satisfactory growth of the plant species. Another object of the present invention is to provide a process for the production of dry organic additivated clods ready to be laid, for the creation of natural lawns, flower beds or flowered areas, areas with fruit and vegetable products, which are characterized by a reduced peat content.

A further object of the present invention is to provide a process for the production of dry organic additivated clods ready to be laid, for the creation of natural lawns, flower beds or flowered areas, areas with fruit and vegetable products, which involves the use of a reduced quantity of adhesive or cohesion agent or the like.

Yet another object of the present invention is to provide a process for the production of dry organic additivated clods ready to be laid, for the creation of natural lawns, flower beds or flowered areas, areas with fruit and vegetable products, which is advantageous from the point of view of cost and which obtains a final product with constant characteristics and with a high yield in its application.

These and yet other objects and relative advantages which shall be more apparent from the description below are achieved by a process for the preparation of dry organic additivated clods, ready to be laid on suitable ground for the creation of natural lawns, flower beds or flowered areas, areas with fruit and vegetable products, which comprises the following steps:
A. Preparating an organic substrate based on humus of vegetable and/or animal origin, coconut dust, peat.
B. Drying said organic substrate.
C. Pressing, obtaining clods with a thickness of between 0.5 and 1.3 cm.
D. Sowing the substrate.
E. Applying covering compost, with the addition of fertilizers and antifungal agents if required.
F. Drying.

Subsequently, even after a considerable amount of time, which can be estimated at around a maximum of two years from its production, the clod produced according to steps A to F indicated above, is laid, wetted and watered regularly until growth of the lawn, of the flower beds or flowered areas, or areas with fruit and vegetable products, according to the type of seed sown in step D of said process.

More in particular, the quantity of humus, peat and coconut dust are respectively between 30% and 40% of humus, between 20% and 60% of peat and between 1 % and 50% of coconut dust, depending on the type of seed for which the clod is intended, indicated as weight of the single components out of the total weight of the composition. The process according to the invention includes the presence of the drying step (B) also in order to decrease the humidity of the substrate formed as described in step A and allow subsequent pressing thereof, which could not take place so efficiently in the presence of high humidity of the substrate. In particular, the residual humidity following said drying step B will preferably be less than 20%.

Said pressing step, indicated above as step C, according to the invention makes it possible to obtain clods of thicknesses variable from 0.5 to 1.3 cm, depending on the type of initial substrate and on the degree of residual humidity of the clod after drying.

According to the process of the present invention, the sowing step D is advantageously carried out after the step of pressing and drying the clod. This step relative to sowing of the clod, advantageously takes place by means of initial application of a layer of water-soluble and biodegradable adhesive, subsequent adhesion of the seeds and further application of a layer of adhesive which allows fixing of the deposited seeds. The adhesive is preferably applied by spraying, in such a manner as to deposit a minimum quantity, just sufficient to make the seeds adhere to the surface layer of the clod.

Following the step of sowing, the upper layer of the clod is covered with a thin layer of compost with the addition of fertilizers and/or antifungal agents if required (step E) which adheres to the surface, also due to the layer of adhesive that was deposited after sowing. The subsequent drying step, preferably carried out at low temperature (step F), is implemented to eliminate residual surface humidity and facilitate future conservation and storage of the clod thus produced.

Said drying step F is preferably performed at significantly low temperatures, between 30°C and 45°C and measured on the surface of the clod. More preferably, step F is carried out at a temperature of 37°C, +/-3 °C, again measured on the surface of the clod.

The process described is suitable for the production of pressed clods of dry organic nature, already sown and with additives, ready to be laid and for relative creation of natural lawns. In the same manner, clods capable of growing vegetables or flowers can be produced.

Purely by way of example, the typical composition of a clod according to the invention suitable to be used for the creation of a natural lawn is described below.

The percentages are expressed as % weight with respect to the total % weight of the composition.

| | | |
|---|---|---|
| Substrate (Humus + Peat + Coconut) 80.1 % | | |
| Seeds | 1.25% | |
| Adhesive | 0.56% | |
| Fertilizer | 0.28% | |
| Antifungal agent | 0.013% | |
| Water retainer | 0.28% | |
| Water | 17.6% | Total 100% |

The process described above according to the present invention has numerous advantages that imply the solution of the majority of the problems highlighted for the processes forming the object of prior art.

In particular, these advantages are summarized below.

The process according to the invention allows the seeds to be deposited on the surface of the clod, and therefore makes it possible to prevent the seeds from penetrating too deeply, with consequent reduction in the growth of the plant species sown and the relative problems of homogeneity already mentioned above. Using the clods according to the invention, and sowing the seed on the surface of the clod, growth of the resulting lawn, grass or flower cushion or of the fruit or vegetable species after positioning of the clods on the surface for which they are intended will be extremely homogeneous. Another very significant advantage obtained with the process according to the invention relates to the fact that it is possible to obtain clods of significantly lower thickness (between 0.5 and 1.3 cm, preferably around 1 cm) with respect to the clods obtainable through the process according to prior art. In fact, according to the invention, the substrate is sown in an advanced step of the process (step D) and in any case after the pressing step which, being carried out on a substrate without seeds, can be performed in conditions of greater pressure, in such a manner as to obtain thicknesses of the clod even less than one centimetre.

If this same pressing step with greater pressure were to be carried out on the substrate already sown, the clod would not have the necessary degree of aeration essential for germination and homogeneous growth of the species sown. For this reason, processes performed according to prior art, which do not include a high pressure pressing step as the clod to be pressed has in any case already been sown, are necessarily limited to obtaining clods with substantial thicknesses.

A clod of substantial thickness has drawbacks, mainly due to the fact that to be held together effectively and not to be too friable and risk breaking apart, and to be easy to handle and suitable to be stored even for long periods, it must be treated (and often even completely soaked) with high quantities of adhesive, with consequent difficulties from a practical point of view and also increased costs for implementation of the process.

For this reason, the fact that in the process according to the present invention minimum quantities of adhesive can be used therefore represents a further technical advantage.

Another advantage of the process according to the invention with respect to known processes is represented by the fact that the base substrate used involves the use of coconut dust which is, at least partly, suitable to replace peat.

Peat is considered a non-renewable element, while coconut dust is classified as renewable element. From the point of view of ecology and protection of the environment, the use of non-renewable elements in smaller quantities can therefore represent a further advantage with respect to processes that use the same non-renewable elements in higher quantities.

Another advantage of the process of the invention is represented by the fact that the composition of the substrate does not involve the use of inert material. This type of material, even if it were subjected to a high pressure pressing step as occurs in the case of step C according to the present invention, would not allow thicknesses comparable with those achieved according to the invention to be reached.

The use of the organic substrate, with absolutely no inert materials, prepared in step A according to the present invention, is particularly advantageous as the components of which it is constituted have the following characteristics.

The organic substrate comprises humus of plant and/or animal origin, coconut dust and peat. According to the present invention, the term "humus" is intended herein as referring to the brown coloured material deriving from natural biological decomposition processes of plant and/or animal remains. Humus has particular biological activities, allows absorption of nutritional structural elements, its composition allows the formation of clay-humus complexes with an increase in resistance to surface erosion and wash-out, and environmental activities, also allowing adsorption and inactivation of substances with potential toxic action protecting against phenomena of pollution. The organic substrate used according to said step A also comprises peat, an organic material deriving from a slow decomposition of plant remains (from ponds and mosses) that has occurred over centuries in boggy areas. Peat used in the production of the present invention gives the organic substrate good water retention capacities, making the ground suitably compact and improving aeration. The organic substrate of the invention also comprises coconut dust, a by-product of the nut of the coconut palm (Cocus nucifera L.) with chemical-physical properties similar to peat. Coconut dust is advantageously used according to the invention as its characteristic sub-acid pH has excellent values for growing grasses. Moreover, its use allows the quantity of peat used in the composition of the substrate to be significantly reduced, thereby reducing consumption of a non-renewable product (peat) in favour of a renewable one (coconut dust).

Step B of drying the organic substrate can be operatively organized and managed, for example, through the use of a system controlled by means of computerized operations. The system used, for example, is composed of a hopper, into which the organic substrate is emptied, a parallel flow rotary drying cylinder equipped with LPG gas burner with air/fuel regulation system, which allows dehydration by means of heating, accessory filtering system. The dehydration process of the organic substrate according to the invention is carried out at an adequate degree of humidity to allow subsequent pressing. The system operates non-stop, with constant infeed of raw material and delivery of dried product. The process is also kept under strict quality control with analysis to detect the percentage of humidity both of the infed material and of the material delivered from the process.

Step C of pressing to obtain clods of a thickness between 0.5 and 1.3 according to the invention is performed, for example, by transporting the substrate delivered from the dryer to the hydraulic press in such a manner to prevent leakages and dispersions of the material, which is particularly powdery after drying. In particular, the substrate delivered from the dryer is unloaded onto a rotary wire filter to sieve and remove any unwanted inert products and reject granules of organic material of large dimensions. Subsequently, the press, operating non-stop and automatically, gives the shape and thickness to the substrate.

Step D of sowing the substrate according to the present invention can be carried out, for example, with the aid of specific machines. The seeds used can be of different type, but those with high purity and germinability are preferable, above all suitable for the final intended use of the clod (for example, resistance to foot traffic, adaptability to the type of cut, renewal of damaged parts, growth rate). The seeds can, for example, preferably comprise a mixture of grass species, such as *Lolium perenne* (50%), *Festuca rubra* (30%) and *Poa pratensis* (20%), said percentages being intended as percentages in weight of the single components of the mixture. The seeds are fixed to the surface of the clods by means of a water-soluble biodegradable adhesive capable of allowing rapid setting and adhesion with high cohesion also at high temperatures. Preferably, the adhesive used is a polyvinyl acetate aqueous dispersion due to its intrinsic macromolecular characteristics and its adhesive properties suitable for the purpose. In particular, the clods formed during step C of the invention are conveyed by means of belts to a tank provided with sprayer for a suitable adhesive. The clods are wetted on the surface with the adhesive, preferably with a polyvinyl acetate aqueous dispersion, in a quantity suitable to promote adhesion of the seeds. The seeds are sprinkled over the surface of the clods which continue to be conveyed on belts. The sown clods, always according to the present invention, can be further treated on the surface with more adhesive, said adhesive preferably being applied by spraying to allow the seeds to remain attached to the substrate and prevent them from being dispersed into the external environment.

Step E of the process of the present invention can advantageously be performed by depositing a covering layer, with the addition of fertilizing and/or antifungal agents if required, on the sown clods conveyed on belts. In particular, the fertilizer preferably used is a microgranular chemical compound commercially known with the name NPK STARTER. Due to its particular chemical-physical properties, said fertilizer is rich in macroelements such as nitrogen (N), phosphorous (P), potassium (K) and microelements such as iron, zinc and manganese. The particular composition of NPK allows its use for the sowing of grass crops, as it promotes germination of the seeds. In said step E of the process, an antifungal agent can also be used if required. Preferably, the product used is a simple non-composted plant amendment enriched with Mycorrhizal inoculant (e.g. *Glomus spp*.), rhizosphere bacteria (such as *Pseudomonas spp*.) and beneficial fungi (such as *Trichoderma harzianum*). The used antifungal agent allows the elimination of fungi pathogenic, for example, to grass species, and promotes the absorption capacity of the roots improving the resistance of seeds to biotic and abiotic stress.

Step F of drying according to the invention is performed to eliminate any residual surface humidity of the clod due, for example, to the aqueous dispersion of the adhesive used during the previous steps of the process according to the invention. The clods are conveyed into a low temperature dryer, produced in such a manner as to prevent the temperature on the surface of the clod from exceeding 45°C.

## Claims

1. Process for the preparation of dry organic additivated clods, ready to be laid on suitable ground for the creation of natural lawns, flower beds or flowered areas, areas with fruit and vegetable products, comprising the following steps:
A. Preparating an organic substrate based on humus of vegetable and/or animal origin, coconut dust, peat.
B. Drying said substrate, obtaining a dried substrate.
C. Pressing.
D. Sowing.
E. Applying covering compost, obtaining an organic additivated clod.
F. Drying said clod, obtaining a dry organic additivated clod.

2. Process according to claim 1, **characterized in that** it comprises, in addition, at least a step G of laying at least one of said organic clods, wetting thereof and regular watering.

3. Process according to claim 1, **characterized in that** said pressing step C results in obtaining clods having a thickness between 0.5 and 1.3 cm.

4. Process according to claim 1, **characterized in that** the quantity of humus, peat and coconut dust in said substrate are respectively between 30% and 40% of humus, between 20% and 60% of peat and between 1% and 50% of coconut dust, said quantities being indicated as percentage in weight of the single components out of the total weight of the composition.

5. Process according to claim 1, **characterized in that** said drying step (B) results in obtaining a dried substrate **characterized by** a residual humidity of less than 20%.

6. Process according to claim 1, **characterized in that** said sowing step (D), is preceded by the application of at least one layer of adhesive.

7. Process according to claim 1 or 6, **characterized in that** said sowing step (D), is followed by the application of at least one layer of adhesive.

8. Process according to claims 6 and 7, **characterized in that** said adhesive is water soluble and biodegradable.

9. Process according to claims 6 and 7, **characterized in that** said adhesive is applied by spraying.

10. Process according to claim 1, **characterized in that** fertilizers and/or antifungal agents are added to said covering soil applied according to said step E.

11. Process according to claim 1, **characterized in that** said drying step F is performed at temperatures of less than 45°C, measured on the surface of the clod.

12. Completely additivated clod of dry organic material and ready to be laid on suitable ground and subsequent creation of natural lawns, flower beds or flowered areas, areas with fruit and vegetable products, **characterized by** having a thickness between 0.5 cm and 1.3 cm.

13. Clod according to claim 12 for the creation of natural lawns, flower beds or flowered areas, areas with fruit and vegetable products.

14. Clod according to claims 12 and 13, **characterized by** having the following composition, expressed in % weight with respect to the total % weight:
| | |
|---|---|
| Substrate (Humus + Peat + Coconut) 80.1 % | |
| Seeds | 1.25% |
| Adhesive | 0.56% |
| Fertilizer | 0.28% |
| Antifungal agent | 0.013% |
| Water retainer | 0.28% |
| Water | 17.6% |
